# EUROPÄISCHE PATENTSCHRIFT

(11) **EP 1 310 303 B1**
(45) Veröffentlichungstag und Bekanntmachung des Hinweises auf die Patenterteilung: **14.12.2005**
(21) Anmeldenummer: 02024763.1
(22) Anmeldetag: 06.11.2002
(51) Int. Cl.: B01L 3/00

(54) **Behälter für mehrere unterschiedliche bei der Durchführung eines Protokolls erforderlichen Reagenzien**
Reservoir for various different reagents for carrying out an assay
Reservoir pour plusieurs reactifs differents necessaires a un systeme de dosage

(30) Priorität: 10.11.2001 DE 10155400
(43) Veröffentlichungstag der Anmeldung: 14.05.2003
(73) Patentinhaber: EPPENDORF AG, 22339 Hamburg (DE)
(72) Erfinder: Richter, Jörg, 19230 Belsch (DE); von Beichmann, Boris, 22391 Hamburg (DE)
(74) Vertreter: Emmel, Thomas

(56) Entgegenhaltungen:
- WO-A-87/05533
- US-A- 5 620 895

## Beschreibung

Die Erfindung bezieht sich auf einen Behälter für mehrere unterschiedliche bei der Durchführung eines Protokolls erforderlichen Reagenzien.

Gattungsgemäße Behälter sind z. B. aus der WO 87/05533 bekannt. Die hier beschriebenen Behälter umfassen mehrere voneinander getrennte Kompartimente, in denen jeweils unterschiedliche flüssige Reagenzien vorrätig gehalten werden können, die bei der Durchführung eines bestimmten Experimentes z. B. nacheinander erforderlich sind.

Bei den Experimenten kann es sich um beliebige unterschiedliche, insbesondere molekularbiologische Aufarbeitungen oder Nachweisreaktionen handeln, die die Verwendung mehrerer Reagenzien in einer vorgegebenen Reihenfolge beinhalten. Das zugrundeliegende Abarbeitungsschema soll im Folgenden generell als Protokoll bezeichnet werden.

Die bekannten Behälter sind als modulare Systeme aufgebaut, die mehrere, gegebenenfalls unterschiedlich dimensionierte Kompartimente für die Reagenzien bzw. für Verdünnungsschritte enthalten. Die Behälter weisen standardisierte Grundflächen auf, z. B. mit den Abmessungen einer Mikrotiterplatte, so daß sie sich z.B. in eine automatisierte Bearbeitung in Workstations integrieren lassen.

Nachteilig ist, daß bei gattungsgemäßen Behältern der Benutzer zunächst die für das entsprechende Protokoll erforderlichen Reagenzien in den durch das jeweilige Format vorgegebenen Mengen in die Kompartimente einfüllen muß.

Mit dem Begriff "Format" soll grundsätzlich jede Einrichtung bezeichnet werden, die eine definierte Anzahl von Probegefäßen mit definierten Dimensionierungen aufweist, insbesondere z.B. Mikrotiterplatten.

Aus der DE 34 05 292 ist ein Format bekannt, das dort als Rack bezeichnet wird. In dieses werden Küvetten eingesetzt, in denen die erforderlichen Reagenzien für ein Protokoll portioniert abgefüllt sind. Weiterhin wird ein Probenbehälter in das Rack eingestzt, der die zu analysierende Probe enthält.

Auf den Küvetten sind Codierungen angebracht, die den Inhalt der jeweiligen Kuvette angeben, während auf dem Rack eine die Probe identifizierende Codierung vorgesehen ist. Sowohl die Codierung auf dem Rack als auch die Codierungen auf den Küvetten können über eine Leseeinheit eingelesen werden. Die bekannten Racks lassen sich allerdings nicht ohne weiteres in üblichen Workstations bearbeiten.

Aufgabe der Erfindung ist es, ausgehend von dem Stand der Technik, Behälter zu schaffen, die in besonders einfacher Weise in einer üblichen Workstation bearbeitet werden können, und bei denen die von einem Benutzer erforderlichen Vorbereitungen vor Durchführung eines Experimentes auf ein Minimum reduziert sind.

Gelöst wird die Aufgabe mit einem Behälter gemäß Anspruch 1.

Erfindungsgemäß ist daher ein Behälter für mehrere unterschiedliche bei der Durchführung eines Protokolls erforderliche Reagenzien vorgesehen, der mehrere voneinander getrennte, transportsicher verschlossene Kompartimente aufweist, wobei der Behälter für die Durchführung eines bestimmten Protokolls in einem definierten Format die für das Protokoll erforderlichen Reagenzien in der durch das Format vorgegebenen Menge bereits enthält. Der Behälter weist in Längs- und Querrichtung im wesentlichen die Abmessungen einer Mikrotiterplatte auf und ist daher wie diese in einer Workstation bearbeitbar. Überdies weist der Behälter mehrere unterschiedlich große Kompartimente auf, die in dem Behälter fest angeordnet sind.

Mit der Erfindung werden also speziell angepaßte Behälter bereitgestellt, die ohne Vorbereitung jeweils für ein bestimmtes Protokoll in einem bestimmten Format in automatisierten Bearbeitungsanlagen eingesetzt werden können.

Hauptvorteil der Erfindung ist, daß so gut wie sämtliche, die Reagenzienvorbereitung betreffenden Arbeitsschritte bei Durchführung eines Protokolls entfallen. Der Benutzer muß lediglich die Eckdaten festlegen, d. h. das jeweilige abzuarbeitende Protokoll und Format definieren und dann ausgehend von diesen beiden Daten den passenden vorkonfektionierten Reagenzienbehälter wählen.

Um die Kompartimente des Behälters transportsicher zu machen und so die darin vorliegenden Reagenzien gegen Auslaufen oder Verdunsten zu schützen, sind die Kompartimente sinnvollerweise verschlossen. Vorzugsweise erfolgt der Verschluß mit einer Folie. Es kann sich dabei z.B. um eine Kunststoffolie handeln. Denkbar ist aber auch ein Sandwichaufbau aus z.B. einer Aluminium- und einer Kunststoffschicht. Vorzugsweise ist die Folie aus transparentem Kunststoff, und sie kann ggf. mit optischen Eigenschaften versehen sein.

Besonders bevorzugt ist die Folie durchstechbar ausgebildet. Bei dieser Ausgestaltung kann die Flüssigkeit mit entsprechenden Pipetten oder anderen Entnahmeeinrichtungen z.B. Injektionskanülen entnommen werden, ohne daß die Folie vorher von dem Behälter entfernt werden muß.

Denkbar ist auch, die Folie segmentiert bzw. passend zu den Kompartimenten vorgestanzt aufzubringen.

Anstelle einer Folie kann der Behälter selbstverständlich auch mit einem Deckel oder dergleichen verschlossen sein. Der Deckel kann lose auf dem Behälter und mit diesem z. B. verrastend ausgebildet sein. Denkbar ist auch, eine feste Verbindung über ein Scharnier vorzusehen.

Der Vorteil eines Deckels wäre, daß der Behälter bei nur teilweisem Verbrauch der Reagenzien in einfacher Weise wieder verschließbar und dann erneut lagerfähig ist.

Weitere vorteilhafte Ausgestaltungen betreffen den Behälter selbst.

So ist z.B. in einer Ausgestaltung vorgesehen, daß die Kompartimente mit einem V-förmigen Boden ausgestattet sind. Eine solche Gestaltung erlaubt eine nahezu restlose Entnahme von Reagenzien aus den Kompartimenten, da auch kleinste Restmengen sich in der V-förmigen Rille sammeln und so einer Entnahme mit z.B. einer Pipette zugänglich sind.

Weitere Ausgestaltungen betreffen die in dem Behälter vorgesehenen Kompartiinente. Besonders bevorzugt ist vorgesehen, daß der Behälter eine durchgehende Höhe aufweist, die z. B. der Höhe eines Standardformats entspricht, z. B. der Höhe von Deepwell-Platten.

Denkbar ist, in den Behältern auch leere Kompartimente vorzusehen, in denen Misch- oder sonstige Behandlungsvorgänge von z. B. Trockensubstanzen durchgeführt werden können.

Die Angabe "Behälter" ist im Rahmen der Erfindung allgemein zu verstehen. Erfindungsgemäß soll damit jeder einer automatisierten Bearbeitung zugängliche Verbund von Kompartimenten erfaßt werden. Im Hinblick auf eine automatisierte Bearbeitung ist vorzugsweise vorgesehen, daß die Grundfläche des Behälters solchen Formaten entspricht, die in automatischen Workstations ohne Probleme behandelt werden können.

Vorzugsweise werden die Kompartimente so ausgebildet, daß eine problemlose Überführung von Reagenzien aus ihnen in eine Mikrotiterplatte mit z.B. einer Mehrkanalpipette möglich ist. In der Regel weisen die Kompartimente eine Länge auf, die z.B. der Länge einer Probengefäßreihe in einer Mikrotiterplatte entspricht und sind weiterhin wie die Reihen einer Mikrotiterplatte in ähnlicher Weise parallel zueinander ausgerichtet.

Bei der automatisierten Bearbeitung ist weiterer wichtiger Aspekt, daß die einzelnen Kompartimente des erfindungsgemäßen Behälters von z.B. der Pipettiereinrichtung einer automatischen Workstation beim Abarbeiten des Protokolls automatisch identifiziert und angefahren werden können.

Denkbar ist in diesem Zusammenhang, den Behälter bzw. die Kompartimente oder die zur Abdeckung verwendete Folie mit entsprechenden Codierungen zu versehen, die von einem Scanner der Workstation erfaßt und entsprechend ausgewertet werden können.

Denkbar ist aber auch, definierte Koordinaten vorzugeben, die die jeweiligen im Rahmen des Testprotokolls anzufahrenden Kompartimente des erfindungsgemäßen Behälters bezeichnen. In diesem Zusammenhang ist besonders bevorzugt vorgesehen, daß bezogen auf seine Grundfläche die Koordinaten der Kompartimente in dem erfindungsgemäßen Behälter, solchen Koordinaten entsprechen, die die Pipettiereinrichtung auch bei der Bearbeitung der die Proben enthaltenden Mikrotiterplatte anfährt. Der Vorteil dieser Ausgestaltung ist, daß für den erfindungsgemäßen Behälter keine vollkommen neuen Koordinaten definiert werden müssen, sondern auf den Bezugsrahmen der ohnedies in der Workstation verarbeiteten Mikrotiterplatten zurückgegriffen werden kann.

Überdies ist vorgesehen, den erfindungsgemäßen Behälter als Reagenzienvorlage für die automatische Bearbeitung in Workstations zu verwenden. Solche Workstations können Formate mit den Abmessungen einer Mikrotiterplatte aufnehmen und automatisierte Arbeitsschritte z.B. Pipettieren, an ihnen ausführen.

Die Erfindung soll im folgenden anhand zweier Abbildungen näher erläutert werden, die eine Ausführungsform in unterschiedlichen Ansichten zeigen, wobei.
- Figur 1: eine Schnittansicht und
- Figur 2: eine Perspektivansicht von schräg oben ist.

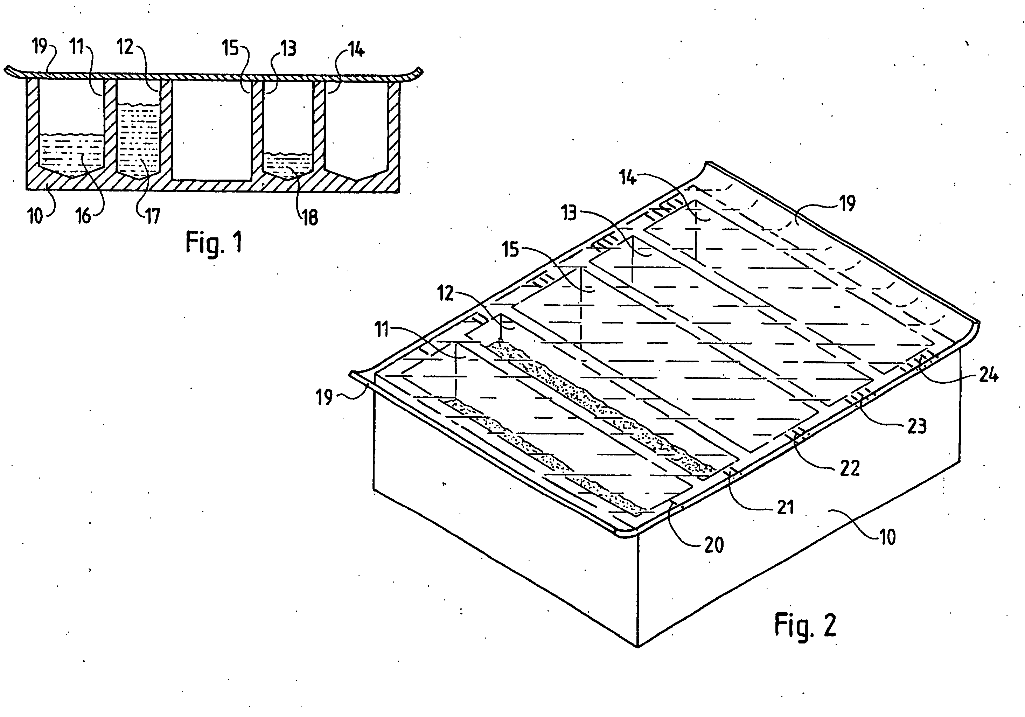

In Figur 1 ist ein Behälter 10 mit mehreren Kompartimenten 11, 12, 13, 14 und 15 dargestellt.

Die Kompartimente 11, 12 und 13 sind mit jeweils unterschiedlichen Reagenzien 16, 17 und 18 in den jeweils erforderlichen Mengen für die Durchführung eines Protokolls in einem bestimmten Format befüllt.

Die Kompartimente 14 und 15 sind nicht befüllt. Hier können Verdünnungs- oder Mischschritte durchgeführt werden.

Im Rahmen der Erfindung können die Kompartimente bzw. Aufnahmen in dem Behälter in beliebiger Anzahl und Konfiguration vorgesehen werden. Weist der Behälter z. B. die Grundfläche einer Mikrotiterplatte auf, so ist z. B. besonders bevorzugt, daß sich die Kompartimente quer, d. h. in Richtung der Reihen in Mikrotiterplatten, erstrecken und in etwa dieselbe Breite aufweisen. In diesem Fall kann in besonders einfacher Weise aus den Kompartimenten direkt in die Reihen der Mikrotiterplatten mit z. B. einer Mehrfachpipette pipettiert werden.

Der Behälter 10 ist mit einer Folie 19 versiegelt, die die Kompartimente 11-15 transportsicher abdeckt und eine Lagerung der enthaltenen Reagenzien 16-18 über einen längeren Zeitraum ermöglicht.

Die Folie kann aus Kunststoff bestehen, gegebenenfalls aber auch einen Sandwichaufbau haben. Bevorzugt ist, daß die Folie optisch transparent und durchstechbar ausgebildet ist, so daß ein vorheriges Entfernen der Folie 19 vor Verwendung in einer automatischen Workstation nicht erforderlich ist. Denkbar ist anstelle der Folie 19 oder auch zusätzlich einen Deckel vorzusehen, der mittels z.B. Verrastung auf dem Behälter 10 gesichert werden kann.

Figur 2 zeigt den Behälter 10 aus Figur 1 in einer Perspektivansicht. Man erkennt die Kompartimente 11-15 und die zur Versiegelung auf dem Behälter 10 angeordnete Folie 19.

In dieser Darstellung ist weiterhin zu erkennen, daß im Randbereich des Behälters Codierungen 20-24 vorgesehen sind, die z.B. mittels eines Scanners in einer Workstation gelesen werden können. Anhand der Codierungen 20-24 lassen sich die jeweilen Kompartimente identifizieren, so daß z.B. in einer Workstation bei Abarbeitung eines bestimmten Protokolls jeweils das für einen bestimmten Schritt erforderliche Reagenz aus dem richtigen Kompartiment entnommen werden kann.

Denkbar wäre allerdings auch, wie oben bereits ausgeführt, anstelle der Codierungen die Positionen der Kompartimente in der Workstation abzuspeichern und im Rahmen des Protokolls entsprechende Koordinaten vorzugeben, die die Pipettiereinrichtung anfahren soll.

## Patentansprüche

1. Behälter für mehrere unterschiedliche bei der Durchführung eines Protokolls erforderliche Reagenzien, mit mehreren voneinander getrennten Kompartimenten die transportsicher verschlossen sind, wobei der Behälter (10) für die Durchführung eines bestimmten Protokolls in einem defi- - nierten Format die für das Protokoll erforderlichen Reagenzien (16, 17, 18) in der durch das Format vorgegebenen Menge enthält, der Behälter (10) in Längs- und Querrichtung im wesentlichen die Abmessungen einer Mikrotiterplatte aufweist und wie diese in einer Workstation bearbeitbar ist und mehrere unterschiedlich große Kompartimente (11, 12, 13, 14) aufweist, die in dem Behälter (10) fest angeordnet sind.

2. Behälter nach Anspruch 1, **dadurch gekennzeichnet, daß** der transportsichere Verschluß mittels einer Folie (19) erfolgt.

3. Behälter nach Anspruch 2, **dadurch gekennzeichnet, daß** die Folie (19) durchstechbar ausgebildet ist.

4. Behälter nach einem der Ansprüche 1-3, **dadurch gekennzeichnet, daß** die Kompartimente (11, 12, 13, 14) in ihrem Bodenbereich V-förmig ausgebildet sind.

5. Behälter nach einem der Ansprüche 1-4, **dadurch gekennzeichnet, daß** die Kompartimente (11, 12, 13, 14) mit Codierungen (20-24) versehen sind, die eine Identifizierung ermöglichen.

6. Behälter nach einem der Ansprüche 1-5, **dadurch gekennzeichnet, daß** die Kompartimente (11, 12, 13, 14) in Positionen angeordnet und ausgerichtet sind, die üblichen Positionen einer Mikrotiterplatte entsprechen.

7. Verwendung eines Behälters nach den Ansprüchen 1 bis 6 als Reagenzienvorlage für die automatische Bearbeitung in Workstations.

## Claims

1. A container for a plurality of different reagents necessary for carrying out an assay with a plurality of compartments, which are separated from one another and are sealed in a manner resistant to damage during transport, whereby, for carrying out a predetermined assay in a defined format, the container contains the reagents (16, 17, 18) necessary for the assay in the amount predetermined by the format, the container (10) substantially has the dimensions, in the longitudinal and transverse directions, of a microtitre plate and, like the latter, may be processed in a workstation and has a plurality of compartments (11, 12, 13, 14) of different size, which are fixedly arranged in the container (10).

2. A container as claimed in claim 1, **characterised in that** the seal resistant to damage during transport is effected by means of a film (19).

3. A container as claimed in claim 2, **characterised in that** the film (19) is of pierceable construction.

4. A container as claimed in one of claims 1-3, **characterised in that** the base region of the compartments (11, 12, 13, 14) is of V-shape.

5. A container as claimed in one of claims 1-4, **characterised in that** the compartments (11, 12, 13, 14) are provided with codings (20, 24) which enable identification.

6. A container as claimed in one of claims 1-5, **characterised in that** the compartments (11, 12, 13, 14) are arranged and aligned in positions which correspond to the usual positions of a microtitre plate.

7. The use of a container as claimed in claims 1-6 as a reagent receptacle for automatic processing in workstations.

## Revendications

1. Réservoir pour plusieurs réactifs différents nécessaires à la réalisation d'un protocole de dosage et comportant plusieurs compartiments séparés l'un de l'autre et obturés de façon à en permettre un transport sûr, le réservoir (10) contenant en vue de la réalisation d'un protocole donné de format défini les réactifs (16, 17, 18) requis pour le protocole en quantités prescrites par le format, et les dimensions en longueur et en largeur du réservoir (10) correspondant essentiellement à celles d'une plaque de microtitration, le réservoir (10) pouvant être traité dans une station de travail et présentant plusieurs compartiments (11, 12, 13, 14) de différente taille agencés dans le réservoir (10) selon une position fixe.

2. Réservoir selon la revendication 1, **caractérisé en ce que** l'obturation en vue du transport sûr est réalisée au moyen d'une pellicule (19).

3. Réservoir selon la revendication 2, **caractérisé en ce que** la pellicule (19) est conformée de façon à pouvoir être percée.

4. Réservoir selon l'une des revendications 1 à 3, **caractérisé en ce que** les compartiments (11, 12, 13, 14) ont une forme de V au niveau de leur fond.

5. Réservoir selon l'une des revendications 1 à 4, **caractérisé en ce que** les compartiments (11, 12, 13, 14) sont dotés de codages (20-24) en permettant l'identification.

6. Réservoir selon l'une des revendications 1 à 5, **caractérisé en ce que** les compartiments (11, 12, 13, 14) sont agencés et orientés selon des positions qui correspondent aux positions usuelles d'une plaque de microtitration.

7. Utilisation d'un réservoir selon les revendications 1 à 6 pour la présentation de réactifs en vue d'un traitement automatique dans une station de travail.
